(19) **Europäisches Patentamt / European Patent Office / Office européen des brevets**

(11) **EP 3 460 441 B1**

(12) **EUROPEAN PATENT SPECIFICATION**

(45) Date of publication and mention
of the grant of the patent:
**29.07.2020 Bulletin 2020/31**

(51) Int Cl.:
***G01M 11/00*** *(2006.01)*

(21) Application number: **17191997.0**

(22) Date of filing: **20.09.2017**

(54) **AN OPTICAL CHANNEL MONITORING SYSTEM, AND ASSOCIATED OPTICAL SENSING SYSTEM AND OPTICAL SENSING METHOD**

SYSTEM ZUR ÜBERWACHUNG EINES OPTISCHEN KANALS UND ZUGEHÖRIGES OPTISCHES ABTASTSYSTEM UND OPTISCHES ABTASTVERFAHREN

SYSTÈME DE SURVEILLANCE DE CANAL OPTIQUE ET SYSTÈME ET PROCÉDÉ DE DÉTECTION OPTIQUE ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2019 Bulletin 2019/13**

(73) Proprietors:
• **Nokia Solutions and Networks Oy
02610 Espoo (FI)**
• **OPTOPLAN AS
7075 Tiller (NO)**

(72) Inventors:
• **DORIZE, Christian
91620 NOZAY (FR)**
• **WAAGAARD, Ole Henrik
7025 Trondheim (NO)**

(74) Representative: **Nokia EPO representatives
Nokia Technologies Oy
Karakaari 7
02610 Espoo (FI)**

(56) References cited:
**EP-A1- 2 765 400     GB-A- 2 544 125
US-B1- 6 388 741     US-B2- 7 271 884
US-B2- 7 872 737**

**Description**

**FIELD OF THE INVENTION**

The present invention relates to optical network, in particular an optical network used as a sensing network.

**BACKGROUND OF THE INVENTION**

Optical technologies are widely used in modern networks in a broad variety of use case scenario for transporting data as they offer high and reliable capacity links.

Another field of application for optical technologies is in the sensing area. Optical techniques are particularly adapted in distributed sensing which relies in probing a line that includes a series of sensors at various locations along said line. Distributed optical sensing networks are usually based on interferometry of light pulses propagating along the line to be probed.

EP 2765400 A1, GB 2544125 A and US 7872737 B2 describe optical channel monitoring systems. The document US 7271884 B2 describes a pseudorandom code sequence injected in a span of an ordinary optical fiber cable, and a coherent receiver for demodulating said code sequence into a beat signal, representative of phase variations. In such system, crosstalk effect may alter the beat signal and subsequently the estimated phase variations.

A solution for optical sensing network is then needed that offers the possibility to interrogate sensors reliably and without a drastic increase of cost of hardware components

**SUMMARY OF THE INVENTION**

The invention aims to remedy all or some of the disadvantages of the above identified prior art. It particularly proposes an optical monitoring system.

A first aspect of the invention relates then to an optical channel monitoring system as described in claim 1.

Thus, thanks to these features, the optical channel monitoring system is enabled to monitor the optical channel from the optical waveguide connected to the coherent optical transmitter and the coherent optical receiver. The laser source pairs the coherent optical transmitter and the coherent optical receiver in order for coherently receiving the optical signal. The optical signal comprises a specific set of data sequences. The reflections of the optical signal trough the optical reflecting means are coherently received by the coherent optical receiver. Said reflections are processed by the processing unit. The processing unit is enabled to determine the optical channel response estimation of the optical waveguide by correlating the reflections with the set of data sequences. The coherent receiving of the optical signal allows the sensing system to benefit from advantages from coherent techniques, as an enhanced signal to noise ratio. The pairing of the transmitter and the receiver through the laser sources allows advantageously a stable over time system. The set of data sequences used for generating the optical signal and processing the reflections offers the possibility to perform a reliable channel estimation of the optical waveguide.

According to various embodiments, the monitoring device comprises one or more of the features below, which should be considered in any possible technical combinations:

- the laser source has a coherence time greater than the propagation time of the optical signal on the optical waveguide between the coherent optical transmitter and the coherent optical receiver,
- the set of data sequences comprises a first pair of complementary sequences and a second pair of complementary sequences, the first pair being carried over a first polarization axis of the optical signal, the second pair being carried over a second polarization axis of the optical signal, the second axis being orthogonal to the first axis,
- the first pair and the second pair are modulated on the respective first and second polarization axis of the optical signal, a first portion of the optical signal comprising the first pair and a second portion of the optical signal comprising the second pair, the first portion and the second portion being transmitted successively,
- the first pair and the second pair are mutually orthogonal sequences, said first pair and said second pair being modulated on the respective first and second polarization axis of the optical signal with a Binary Phase Shift Keying "BSPK" modulation, the first pair and the second pair being transmitted simultaneously,
- the first pair and the second pair are mutually orthogonal sequences, said first pair and said second pair being modulated on the respective first and second polarization axis of the optical signal with a Quadrature Phase Shift Keying "QSPK" modulation, the first pair being mapped on a first QPSK symbol, the second pair being mapped on a second QPSK symbol, the first QPSK symbol and the second QPSK symbol being transmitted simultaneously,
- the first pair and the second pair are Golay sequences,
- the coherent optical transmitter is adapted to transmit repeatedly the optical signal according to a duty cycle,
- the optical reflecting means comprise at least two optical reflectors,

- the at least two optical reflectors are Fiber Bragg grating "FBG",
- the symbol rate of the optical signal is determined according to the distance between the locations of the at least two optical reflectors,
- the symbol rate of the optical signal is determined according to four times the distance between the locations of the at least two optical reflectors,
- the symbol rate of the optical signal is determined according to two times the distance between the locations of the at least two optical reflectors,
- the optical reflecting means comprise particles from the optical waveguide generating Rayleigh scattering.

A second aspect of the invention relates then to an optical sensing system according to claim 14.

Thus, thanks to these features, the optical sensing system comprises the optical channel monitoring system and the other processing unit. The optical channel monitoring system offers the benefits of a coherent optical system. The pairing of the transmitter and the receiver through the laser source allows advantageously for a stable over time system. The set of data sequences used for generating the optical signal and processing the reflections offers the possibility to perform a reliable channel estimation of the optical waveguide. Advantageously the other processing unit is adapted to monitor modification of the estimation of the optical channel response performed by the optical channel monitoring system, said modification being representative of a physical change that occurred on the optical waveguide.

A third aspect of the invention relates then to an optical sensing method according to claim 15.

**BRIEF DESCRIPTION OF THE FIGURES**

Some embodiments of the present invention are now described, by way of example only, and with reference to the accompanying drawings, in which:

- FIG. 1 is a schematic block diagram of an optical channel monitoring system and an optical sensing system according to embodiments of the invention,
- FIG. 2 is a schematic block diagram of an optical waveguide from an optical sensing system according to an embodiment of the invention,
- FIG. 3a, FIG. 3b, FIG. 3c and FIG. 3d are schematic time diagrams of set of data sequences according to embodiments of the invention,
- FIG. 4a and FIG. 4b are schematic time diagrams of set of data sequences according to an embodiment of the invention,
- FIG. 5a and FIG. 5b are schematic diagrams of set of data sequences according to an other embodiment of the invention,
- FIG. 6a and FIG. 6b are schematic diagrams of set of data sequences according to an other embodiment of the invention,
- FIG. 7 is a schematic block diagram of an optical sensing method according to an embodiment of the invention.

The same reference number represents the same element to the same type of element on all drawings, unless stated otherwise.

**DESCRIPTION OF EMBODIMENTS**

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims.

In the following description, well-known functions or constructions by the man skilled in the art are not described in detail since they would obscure the invention in unnecessary detail.

In the following description of the figures, some elements designated with arrows are depicting either optical signals carried on waveguides or electrical signals carried on wired connections. The orientations of the arrows symbolize the propagation direction of the optical and/or electrical signals. Such schematic representations are non-limiting and serve only for the understanding of the invention.

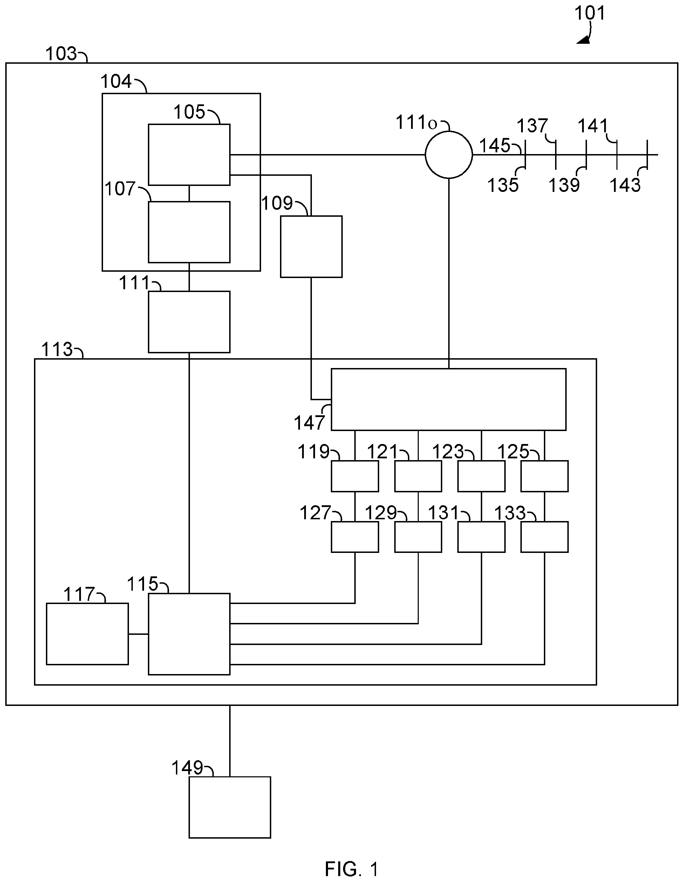

Referring to figure **FIG. 1,** a schematic block diagram of an optical channel monitoring system and an optical sensing system according to embodiments of the invention is depicted.

In an embodiment, an optical channel monitoring system (OCMS) 103 comprises a coherent optical transmitter ("the transmitter") 104, a coherent optical receiver ("the receiver") 113, an optical waveguide 145, a sequence generator 111 and a laser source 109.

The transmitter 104 and the receiver 113 are adapted for coherent transmission of optical signals. Such transmissions are based on amplitude and phase modulation, possibly on the two polarizations of an optical signal. A local oscillator or a reference oscillator at the wavelength of interest is combined with the data sequence to be transmitted at the coherent transmitting side, whereas another oscillator, tuned at the same wavelength is used at the receiving side to interfere with the received signal. The detection at the receiving side can be heterodyne or homodyne. In another example the transmitter 104 and the receiver 113 are tuned with the same local oscillator.

The optical waveguide 145 connects said coherent optical transmitter 104 and said coherent optical receiver 113. The optical waveguide 145 is the measurement medium of the optical channel monitoring system.

In an example, the optical waveguide 145 is an optical fiber. For some applications, the optical waveguide 145 is a single-mode optical fiber (SMF). Such single-mode optical fiber is particularly adapted for vibration sensing on sea or earth ground floor. For some other applications, the optical waveguide 145 may be an optical fiber typically used in the telecommunication field or in the medical field.

In an example, the transmitter 104 and the receiver 113 are each connected to an optical circulator 111o. The transmitter 104 transmits optical signals on the optical waveguide 145 through said optical circulator 111o. Reflected optical signals propagates back on the optical waveguide 145 to the optical circulator 111o and are dispatched to the receiver 113.

In an embodiment, the optical waveguide 145 comprises optical reflecting means, enabled to reflect part of an optical signal propagating in one or in another direction of the optical waveguide 145. Said optical reflecting means are acting as sensors dispatched on the optical waveguide 145.

In an example, the optical reflecting means are formed of a section of the line which is modulated by a physical or chemical measurand. In the case of dedicated discrete reflectors, the sensor is typically formed in between two reflectors. The measurand may alter the phase, amplitude or polarization of the reflected signal. The modulation of the reflected light is demodulated and demultiplexed to obtain the modulation of the measurand of the various sensors.

In an example, the optical reflecting means are generated by the intrinsic Rayleigh scattering effect of the optical waveguide 145. An optical signal propagating along the optical waveguide 145 is partially reflected by particles and intrinsic imperfections from said optical waveguide 145.

In another embodiment, the optical waveguide 145 is an optical fiber and the optical reflecting means are optical reflectors 135, 137, 139, 141, 143 distributed along the optical waveguide 145. The distances in-between two consecutive optical reflectors 135, 137, 139, 141, 143 are equals, corresponding to equally distributed optical reflectors on the optical waveguide 145.

In an example, the optical reflectors 135, 137, 139, 141, 143 are Fiber Bragg gratings embedded into the optical fiber.

The transmitter 104 is paired to the laser source 109. It is meant by the term "paired" that the local/reference oscillator from the transmitter 104 is the laser source 109, and hence the optical signal transmitted by the transmitter 104 is tuned at the carrier wavelength from the laser source 109.

The transmitter 104 comprises an in-phase and quadrature (IQ) modulator 105, a RF driver 107. An example of IQ modulator is a Mach-Zehnder modulator for generating a Binary Phase Shift Keying "BPSK" signal, or for generating higher order modulation formats by combination of Mach-Zehnder modulators, as shown in "Polarization QAM modulation (POL-QAM) for coherent detection schemes." Bülow, Henning, Optical Fiber Communication Conference, Optical Society of America, 2009. The transmitter 104 may also comprise other components and functionalities that are not depicted in figure FIG. 1 for clarity purpose.

The RF driver receives a set of data sequences generated by the sequence generator 111. A modulating electrical driving signal is generated by said RF driver, according to the data sequences, and is provided to the IQ modulator 105.

The IQ modulator 105 receives the modulating electrical signal and modulates a reference optical signal provided by the laser source 109, and produces an optical signal that comprises said set of data sequences.

The transmitter 104 transmits then the produced optical signal on the optical waveguide 145.

The optical signal propagates along the optical waveguide 145 and reaches the optical reflecting means. In the case where the optical reflecting means are generated by particles from the optical waveguide 145, the Rayleigh scattering effect reflects parts of the optical signal, continuously as it propagates. In the case where the optical reflecting means are the optical reflectors 135, 137, 139,141, 143, each of the optical reflector reflects part of the optical signal, and let pass another part of said optical signal. As the optical signal passes through more and more optical reflectors, its amplitude decreases as some energy is reflected. The reflected parts of the optical signal form a reflected optical signal that comprises the reflections of the optical signal delayed in time.

The reflections of the optical signal propagates along the optical waveguide 145 in the opposite direction of the propagation of the optical signal. They reach the receiver 113. Optionally the reflections went through the optical circulator 111o. Such optical circulator 111o offers practical connection means between the transmitter 104, the receiver 113 and the optical waveguide 145 as it allows to co-locate the transmitter 104 and the receiver 113.

The receiver 113 receives the reflections from the optical signal and further process them. The receiver 113 comprises an optical hybrid receiver 147, paired or locked with the laser source 109, enabling the coherent receiving of the optical signal. The receiver 113 also comprises differential detectors 119, 121, 123, 125 for converting the optical signal into analog electrical signals. It should be noted that the processing or conversion of an optical signal involves the detection of optical intensity from said optical signal. Measurements of the optical signal field associated to said optical signal stems from the use of coherent receiver. The produced analog electric signals are digitally converted by means of analog to digital converters (ADC) 127, 129, 131, 133 comprised in the receiver 113. In the example of figure FIG. 1, four differential detectors are each connected to four different ADC, in order to illustrate the decomposition of the received reflections into two polarizations components, each polarization component comprising an in-phase component and a quadrature component. Such receiving scheme is particularly adapted when the optical signal is transmitted with a phase modulation as a "Quadrature Phase Shift Keying "QPSK" modulation and using the two polarization states.

The digital samples produced by the conversion of the ADCs 127, 129, 131, 133 are provided to the processing unit 115 from the receiver 113. Alternatively a signal recorder can be implemented to allow for a later off-line processing of the recorded data.

The processing unit 115 is enabled to perform digital signal processing functions such as correlation process, crosstalk deconvolution and phase estimation combiner on the received samples corresponding to the reflections of the optical signal.

The processing unit 115 performs correlation process on the received and digitized reflections and with the set of data sequences provided by the signal generator 111. From this processing, the processing unit 115 is enabled to determine a channel response estimation of the optical waveguide 145. Indeed the optical waveguide 145 with its optical reflecting means bias the optical signal and its reflections. It is then meant by channel response estimation, an estimation of the optical field of the optical waveguide 145 which comprises parameters characterizing the optical channel such as intensity, state of polarizations, and optical phase of each of the two polarization axes as described by a Jones matrix. As the content of the optical signal, the set of data sequences is known, the processing unit 115 is able to determine influence of the optical waveguide 145 by comparing through correlations the received reflections of the initial content of the optical signal. The determination is achieved by the phase estimation combiner which allows to estimate the channel response of the optical waveguide 145.

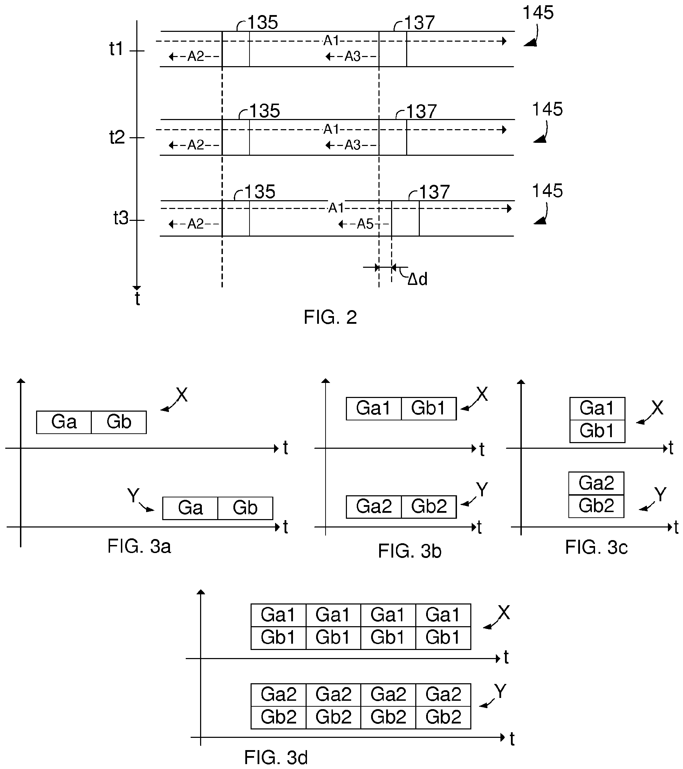

Referring to figure **FIG. 2,** a schematic block diagram of an optical waveguide from an optical sensing system according to an embodiment of the invention is depicted.

In an embodiment, an optical sensing system 101 comprises the optical channel monitoring 103, and another processing unit 149 (cf. figure FIG. 1) comprising a function to track modification of the channel estimations of the optical waveguide 145.

The figure FIG. 2 depicts section-views of the optical waveguide 145. In the present example, the optical waveguide 145 is an optical fiber with optical reflectors 135 and 137. In another example, the following is applicable to an optical waveguide 145 relying on Rayleigh scattering effect to generate reflections.

The optical waveguide is depicted at instant t1, subsequent instant t2, and subsequent instant t3.

At instant t1, the optical waveguide 145 is in a given physical or mechanical state. The transmitter 104 transmits the optical signal with the set of data sequences on the optical waveguide 145 as depicted by arrow A1. Two reflections, but possibly more as explained above, are generated respectively by the optical reflector 135 (arrow A2) and the optical reflector 137 (arrow A3). These reflections propagates then up to the receiver 113. A first channel estimation of the response of the optical waveguide 145 is determined by the processing unit 115.

At the subsequent instant t2, the optical waveguide 145 is in the same physical or mechanical state as at instant t1. The transmitter 104 transmits the optical signal with the set of data sequences on the optical waveguide 145 as depicted by arrow A1. Since the optical waveguide 145 is in the same state, same two reflections (arrows A2 and arrow A3) are generated respectively by the optical reflector 135 and the optical reflector 137. These reflections propagate then up to the receiver 113. A second channel estimation of the response of the optical waveguide 145 is determined by the processing unit 115. Since the reflections at instant t2 are identical as those from instant t1, the second channel estimation is similar to the first channel estimation.

At the subsequence instant t3, the optical waveguide 145 is modified. For example the optical fiber was submitted to a mechanical vibration that slightly modifies the fiber strain between two consecutive optical reflectors. In another example, the structure of the optical waveguide 145 is modified locally by an external physical or chemical event, which modifies the Rayleigh scattering phenomenon. In the present example of figure FIG. 2, the optical reflector 137 is slightly moved from a distance $\Delta d$ compared to its initial position. The transmitter 104 transmits the optical signal with the set of data sequences. The reflection generated by the optical reflector 135 is unchanged (arrow A2) compared to the instants t1 and t2. The reflection generated by the optical reflector 137 (arrow A5) is modified as said reflector is not physically positioned in the same manner. The reflections (arrow A2 and A5) are then received by the receiver 113. The signal processing unit 115 determines a third channel estimation response from the optical waveguide 145.

The first channel estimation, the second channel estimation and the third channel estimation are provided to the other processing unit 149 from the optical sensing system 101. From the similarity of the first and second channel estimation, the other processing unit 149 determines that no physical modification of the optical waveguide 145 occurred between instant t1 and t2. The other processing unit 149 compares then the third channel estimation with the second channel estimation. The other processing unit 149 is enabled to determine a disparity between the estimations, in particular a difference of estimated relative phase from the comparison, said disparity originating from the new positioning of the optical reflector 137. The other processing unit 149 is then enabled to determine a physical modification of the optical waveguide 145. Advantageously, the optical sensing system is adapted to measure vibration inducing movements of the optical waveguide 145.

Referring to figures FIG. 3a, FIG. 3b and FIG. 3c, schematic time diagrams of set of data sequences according to embodiments of the invention are depicted.

In the invention, the set of data sequences are probing sequences which purpose is to spread in time the energy of interrogation signal compared to a pulse signal. Such set of data sequences is advantageous as it allows to probe the optical waveguide 145 with an optical signal with constant and relatively low amplitude as opposed to a pulse interrogation signal. The sum of the autocorrelations of each sequence of the set of data sequences is zero except for delay 0, which gives a constant power spectral density over the whole interrogation bandwidth.

According to the invention, the set of data sequences comprises complementary sequences, for example Golay complementary sequence pair {-1, 1}, which exhibit the property:

$$G_a(n) \otimes G_a(n) + G_b(n) \otimes G_b(n) = \delta(n) \qquad (1)$$

Where $G_a$ and $G_b$ are complementary Golay sequences, n is for a given symbol, $\otimes$ is the correlation operator, and $\delta$ is the Dirac function.

The set of data sequences is generated by the sequence generator 111, modulated by the IQ modulator 105 and transmitted periodically by the transmitter 104, according to the required duty cycle. The generated optical signal comprises the following components:

$$E_{tx}(n + kN) = G_x(n) \qquad (2)$$

and

$$E_{ty}(n + kN) = G_y(n) \qquad (3)$$

Where $E_{tx}$ is the component from a first polarization x from the optical signal, $E_{ty}$ is the component from a second polarization y from the optical signal, N is the repetition period, k is the k-th repetition of period N, $G_x$ and $G_y$ being respective complementary sequences pairs such as Golay sequences.

At the receiver 113, the reflected optical signal comprises the following components:

$$E_{rx}(n) = h_{xx}(n) * G_x(n) + h_{xy}(n) * G_y(n) \qquad (4)$$

$$E_{ry}(n) = h_{yx}(n) * G_x(n) + h_{yy}(n) * G_y(n) \qquad (5)$$

Where $E_{rx}$ is the first polarization x component, $E_{ry}$ is the second polarization component, $h_{xx}$ is the channel response of the optical waveguide 145 for the first polarization x, $h_{yy}$ is the channel response of the optical waveguide 145 for the second polarization y, $h_{xy}$ is the response after modulation onto second polarization y and measured onto first polarization x at the diversity receiver 113, and $h_{yx}$ is the response after modulation onto first polarization x and measured onto second polarization y at the diversity receiver 113.

The polarization-dependent channel responses as observed at the receiver 113 side can then be expressed as:

$$h'_{xx}(n) = E_{rx}(n) \otimes G_x(n) \qquad (6)$$

$$h'_{xy}(n) = E_{rx}(n) \otimes G_y(n) \qquad (7)$$

$$h'_{yx}(n) = E_{ry}(n) \otimes G_x(n) \qquad (8)$$

$$h'_{yy}(n) = E_{ry}(n) \otimes G_y(n) \qquad (9)$$

Referring to figure **FIG. 3a,** a time diagram of transmission of set of data sequences carried by the optical signal is depicted.

In an embodiment, the optical signal successively carries the pair of complementary sequences $G_a$, $G_b$. In an example, a BPSK modulation codes the pairs of sequences. In another example, a QPSK modulation codes the pairs of sequences. A first portion of the optical signal carries the sequences $G_a$, $G_b$ on the first polarization X. Then a second portion of the optical signal carries the sequences $G_a$, $G_b$ on the second polarization Y.

The portions of the optical signal propagates on the optical waveguide 145 and sounds the optical reflecting means. The reflections generated are reaching the receiver 113 and are processed by the processing unit 115.

The processing unit 115 performs the determination of the received components of the reflections, for each polarization, namely $E_{rx}$ and $E_{ry}$, which are complex IQ components. The estimated $E_{rx}$ and $E_{ry}$ are then correlated with $G_x$ and $G_y$, namely the pair of sequences $G_a$ and $G_b$, in order to determine $h'_{xx}$, $h'_{yx}$, and $h'_{xy}$, $h'_{yy}$ according to equations (6-9).

The probing time of the optical waveguide 145, according to the sending of two successive pairs of complementary sequences, depends on the time needed for generating the reflections, which is dependent on the speed of propagation and the distances of the optical reflecting means, and according to the length of the pairs of sequence, as the two polarizations are sounded sequentially. Enhancements of the probing time are further discussed in the following embodiments.

Referring to figure **FIG. 3b,** another time diagram of transmission of set of data sequences carried by the optical signal is depicted.

In an embodiment two different pair of complementary sequences are embedded into the optical signal. A first pair of complementary sequences $G_{a1}$, $G_{b1}$ is defined as:

$$G_{a1}(n) \otimes G_{a1}(n) + G_{b1}(n) \otimes G_{b1}(n) = \delta(n) \quad (10)$$

A second pair of complementary sequences $G_{a2}$, $G_{b2}$ is generated to be orthogonal with the first pair, said second pair and said first pair possessing mutual orthogonality:

$$G_{a2}(n) \otimes G_{a2}(n) + G_{b2}(n) \otimes G_{b2}(n) = \delta(n) \qquad (11)$$

$$G_{a1}(n) \otimes G_{a2}(n) + G_{b1}(n) \otimes G_{b2}(n) = 0 \qquad (12)$$

$$G_{a1}(n) \otimes G_{b1}(n) + G_{a2}(n) \otimes G_{b2}(n) = 0 \qquad (13)$$

In an example, the two pairs of sequences $G_{a1}$, $G_{b1}$ and $G_{a2}$, $G_{b2}$ are determined according to Golay sequences and Hadamard matrices. Such sequences are in an example:

$$G_{a1}^4 = [1, -1, -1, -1] \qquad (14)$$

$$G_{b1}^4 = [-1, 1, -1, -1] \qquad (15)$$

$$G_{a2}^4 = [-1, -1, 1 - 1] \qquad (16)$$

$$G_{b2}^{4} = [1,1,1,-1] \qquad (17)$$

In another example, a recurrence formula allows to determine other sequences that are complementary and mutually orthogonal, and of length $N_G = 2^{n+2}$:

$$G_{a1}^{2Ng} = [G_{a1}^{Ng}, G_{b1}^{Ng}] \qquad (18)$$

$$G_{b1}^{2Ng} = [G_{a1}^{Ng}, -G_{b1}^{Ng}] \qquad (19)$$

$$G_{a2}^{2Ng} = [G_{a2}^{Ng}, G_{b2}^{Ng}] \qquad (20)$$

$$G_{b2}^{2Ng} = [G_{a2}^{Ng}, -G_{b2}^{Ng}] \qquad (21)$$

Advantageously, the sequence generator 111 is enabled to generate variations of complementary and mutually orthogonal sequences of different lengths.

In an embodiment the two complementary & orthogonal pair of sequences $G_{a1}$, $G_{b1}$ and $G_{a2}$, $G_{b2}$ are transmitted simultaneously. A BPSK modulation is used to code the pair of sequences. Complementary and orthogonal pairs of sequences allows to factorize the sending of the sequences. On the first polarization axis X, the two sequences $G_{a1}$, $G_{b1}$ of the first complementary pair are successively is mapped on BPSK symbols. At the same time, on the second polarization axis Y, the two sequences $G_{a2}$, $G_{b2}$ of the second complementary pair are successively mapped on BPSK symbols. The BPSK symbols from the two polarizations axes are transmitted simultaneously: the BPSK symbol carrying $G_{a1}$ on first polarization axis X is sent at the same time as the BPSK symbol carrying $G_{a2}$ on the second polarization axis Y, and then the BPSK symbol carrying $G_{a2}$ on the first polarization axis X is sent at the same time as the BPSK symbol carrying $G_{b2}$ on the second polarization axis Y.

In an example the factorization of the parts of the pairs for the first polarization x is as follows:

$$E_{tx}(n + kN) = G_{xI}(n) + jG_{xQ}(n) \qquad (22)$$

Equation (22) is the general expression for modulation mapping. In an example where BPSK is used, the term $G_{xQ}$ is set to 0.

$$G_{xI}(n) = \begin{cases} G_{a1}(n); 0 \le n < N_G \\ 0; N_G \le n < N_G + N_{Sep} \\ G_{b1}(n - N_G - N_{Sep}); N_G + N_{Sep} \le n < 2N_G + N_{Sep} \\ 0; 2N_G + N_{Sep} \le n < N \end{cases} \qquad (23)$$

$$G_{yI}(n) = \begin{cases} G_{a2}(n); 0 \le n < N_G \\ 0; N_G \le n < N_G + N_{Sep} \\ G_{b2}(n - N_G - N_{Sep}); N_G + N_{Sep} \le n < 2N_G + N_{Sep} \\ 0; 2N_G + N_{Sep} \le n < N \end{cases} \qquad (24)$$

Where $N_G$ is the length of a sequence from the pair, $N_{Sep}$ is a separation interval, $N = 2.(N_G + N_{Sep})$ is the overall transmitted code length.

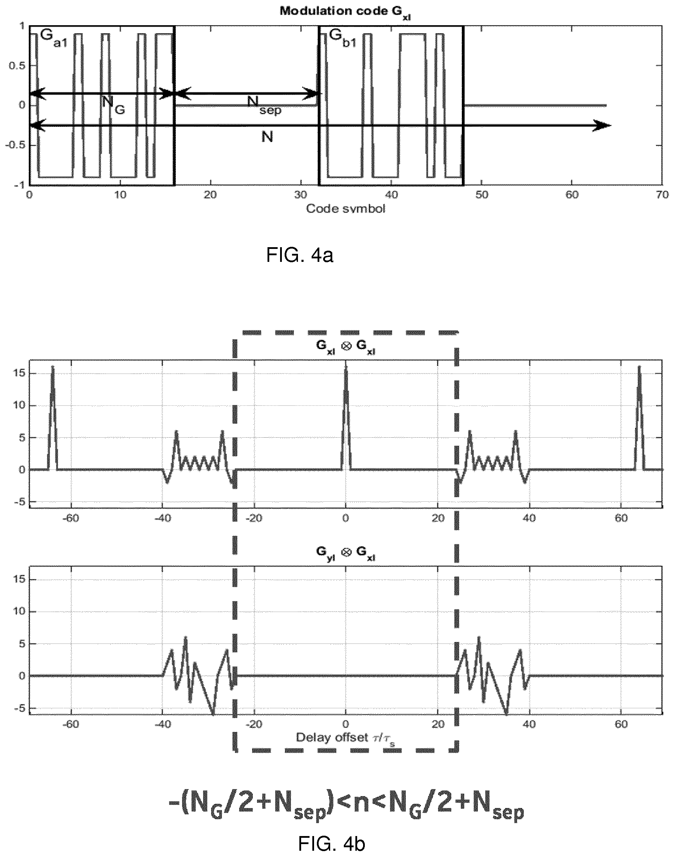

An example of signal $G_{xI}$ corresponding to the sending of the pair of sequences $G_{a1}$, $G_{b1}$ through the first polarization X of the optical signal is provided in figure **FIG. 4a**. The sequence $G_{a1}$ is transmitted first on first polarization X (together with sequence $G_{a2}$ on second polarization Y, not depicted in FIG. 4a), then after a separation interval, the sequence $G_{b1}$ is transmitted on first polarization X (together with sequence $G_{b2}$ on second polarization Y, not depicted in FIG. 4a). The figure **FIG. 4b** illustrates simulated results of correlation of $G_{xI}$ and $G_{yI}$, that are achievable by the processing unit 115 from the coherent optical receiver 113. The upper diagram of figure FIG. 4b depicts auto-correlation of $G_{xI}$ which corresponds to a Dirac impulse response around the delay offset $-(N_G/2+N_{Sep})<n<(N_G/2+N_{Sep})$. The lower diagram of figure FIG. 4b depicts the correlation of $G_{xI}$ and $G_{yI}$ which is null around the delay offset $-(N_G/2+N_{Sep})<n<(N_G/2+N_{Sep})$. The Dirac impulse response of the auto-correlation of $G_{xI}$ combined with the nullity of the inter-correlation of $G_{xI}$ and $G_{yI}$ allows to determine the channel response $h'_{xx}$ (cf. equation (6)) of the optical waveguide 145.

In an embodiment, the probing sequence duration is determined according to $N_G$, $N_{sep}$, and to the duration of a symbol $T_{symb}$. In an example a perfect estimation with only null samples around the Dirac response is achievable if the optical waveguide 145 has an impulse response with a duration $T_{ir}$ that spreads over a time inferior to $(N_G/2+N_{sep})T_{symb}$. In another example, the sequence length $N_G$ and the separation interval $N_{Sep}$ are determined such as $N_G>2(T_{ir}/T_{symb}-N_{Sep})$.

Referring to figure **FIG. 3c,** another time diagram of transmission of set of data sequences carried by the optical signal is depicted.

In an embodiment, the pair of sequences $G_{a1}$, $G_{b1}$ and the pair of sequences $G_{a2}$, $G_{b2}$ are complementary and mutually orthogonal sequences. Such pairs of sequences are obtainable from Golay sequences and Hadamard matrices. Examples of such sequences are provided by equations (14) to (21).

In an embodiment, a QPSK modulation is used and the polarization components are structured with an additional complex component. Compared to polarization components as depicted in equations (4) and (5), the complex polarization components of the optical signal at the transmitter output are as follows:

$$E_{tx}(n + kN) = G_{xI}(n) + jG_{xQ}(n) \quad (25)$$

$$E_{ty}(n + kN) = G_{yI}(n) + jG_{yQ}(n) \quad (26)$$

$E_{tx}$ and $E_{ty}$ are complex signals with respective real parts $G_{xI}$ and $G_{yI}$ and respective imaginary parts $G_{xQ}$ and $G_{yQ}$.

The optical signal reflected by the reflecting means and received at the coherent optical receiver 113 are as follows:

For the first polarization X:

$$E_{rx}(n) = h_{xx}(n) * E_{tx}(n) + h_{xy}(n) * E_{ty}(n) \quad (27)$$

$$E_{rx}(n) = h_{xx}(n) * (G_{xI}(n) + jG_{xQ}(n)) + h_{xy}(n) * (G_{yI}(n) + jG_{yQ}(n)) \quad (28)$$

For the second polarization Y:

$$E_{ry}(n) = h_{yx}(n) * E_{tx}(n) + h_{yy}(n) * E_{ty}(n) \quad (29)$$

$$E_{ry}(n) = h_{yx}(n) * (G_{xI}(n) + jG_{xQ}(n)) + h_{yy}(n) * (G_{yI}(n) + jG_{yQ}(n)) \quad (30)$$

The correlation processes to estimate the impulse response of the sensing array of the optical reflecting means for the first polarization X is then as follows:

$$h'_{xx}(n) = E_{rx}(n) \otimes (G_{xI}(n) + jG_{xQ}(n)) \quad (31)$$

$$h'_{xx}(n) = h_{xx} * (G_{xI} \otimes G_{xI} + G_{xQ} \otimes G_{xQ} + j(G_{xQ} \otimes G_{xI} - G_{xI} \otimes G_{xQ})) + h_{xy} * (G_{yI} \otimes$$

$$G_{xI} + G_{yQ} \otimes G_{xQ} + j(G_{yQ} \otimes G_{xI} - G_{yI} \otimes G_{xQ})) \quad (32)$$

$$h'_{xy}(n) = E_{rx}(n) \otimes (G_{yI}(n) + jG_{yQ}(n)) \qquad (33)$$

$$h'_{xy}(n) = h_{xx} * (G_{xI} \otimes G_{yI} + G_{xQ} \otimes G_{yQ} + j(G_{xQ} \otimes G_{yI} - G_{xI} \otimes G_{yQ})) + h_{xy} * (G_{yI} \otimes G_{yI} + G_{yQ} \otimes G_{yQ} + j(G_{yQ} \otimes G_{yI} - G_{yI} \otimes G_{yQ})) \qquad (34)$$

Estimation is achievable without crosstalk when the following correlation results holds:
For $h'_{xx}$:

$$G_{xI} \otimes G_{xI} + G_{xQ} \otimes G_{xQ} = \delta \qquad (35)$$

$$G_{xQ} \otimes G_{xI} - G_{xI} \otimes G_{xQ} = 0 \qquad (36)$$

$$G_{yI} \otimes G_{xI} + G_{yQ} \otimes G_{xQ} = 0 \qquad (37)$$

$$G_{yQ} \otimes G_{xI} - G_{yI} \otimes G_{xQ} = 0 \qquad (38)$$

For $h'_{xy}$:

$$G_{xI} \otimes G_{yI} + G_{xQ} \otimes G_{yQ} = 0 \qquad (39)$$

$$G_{xQ} \otimes G_{yI} - G_{xI} \otimes G_{yQ} = 0 \qquad (40)$$

$$G_{yI} \otimes G_{yI} + G_{yQ} \otimes G_{yQ} = \delta \qquad (41)$$

$$G_{yQ} \otimes G_{yI} - G_{yI} \otimes G_{yQ} = 0 \qquad (42)$$

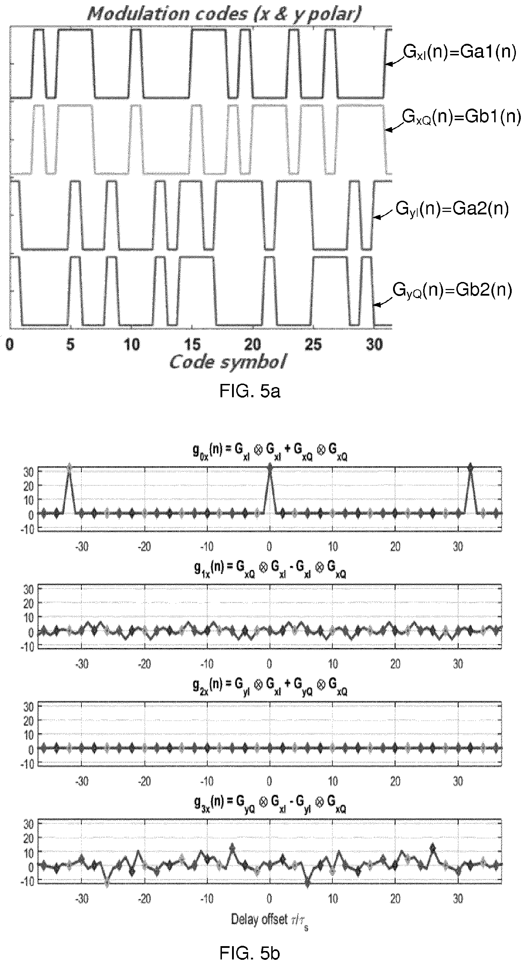

As illustrated by figure FIG. 5b, equations (35), (37) (39, (41) are satisfied everywhere, while equations (36), (38, (40), (42) equal zero for every 4 samples.

When a QPSK modulation is used to code the pair of sequences, complementary and orthogonal pairs of sequences allow to factorize the sending of the sequences. On the first polarization axis X, the first pair $G_{a1}$, $G_{b1}$ is mapped on QPSK symbols. On the second polarization axis Y, the second pair $G_{a2}$, $G_{b2}$ is mapped on QPSK symbols. The QPSK symbols from the two polarizations axes are transmitted simultaneously: the QPSK symbol carrying $G_{a1}$ and the QPSK symbol carrying $G_{b1}$ on first polarization axis X are sent at the same time as the QPSK symbol carrying $G_{a2}$ and the QPSK symbol carrying $G_{b2}$ on the second polarization axis Y. Combination of QPSK modulation with complementary and orthogonal pair of sequences is advantageous as it allows a gain of transmission time of a factor 2 compared to the use of a BSPK modulation (figure FIG. 3b), and of a factor 4 compared to successive transmitting of the pairs of sequences (figure FIG. 3a).

The pairs of sequences are mapped as follows on the QPSK symbols:

$$G_{xI}(n) = G_{a1}(n), G_{xQ}(n) = G_{b1}(n) \qquad (43)$$

$$G_{yI}(n) = G_{a2}(n), G_{yQ}(n) = G_{b2}(n) \qquad (44)$$

At the coherent optical receiver 113, the channel responses yielded by the correlation processes from the processing unit 115 are:

$$h'_{xx}(n) = h_{xx}(n) + j\left(h_{xx}(n) * (G_{xQ}(n) \otimes G_{xI}(n) - G_{xI}(n) \otimes G_{xQ}(n))\right) + \left(h_{xy}(n) * \right.$$

$$\left. (G_{yQ}(n) \otimes G_{xI}(n) - G_{yI}(n) \otimes G_{xQ}(n))\right) \quad (45)$$

$$h'_{xy}(n) = h_{xy}(n) - j\left(h_{xy}(n) * (G_{xQ}(n) \otimes G_{xI}(n) - G_{xI}(n) \otimes G_{xQ}(n))\right) + \left(h_{xx}(n) * \right.$$

$$\left. (G_{yQ}(-n) \otimes G_{xI}(-n) - G_{yI}(-n) \otimes G_{xQ}(-n))\right) \quad (46)$$

The processing unit 115 is adapted to determine h'$_{xx}$ and h'$_{xy}$, and h'$_{yy}$ and h'$_{yx}$ from the complementary and mutual orthogonality of the pairs of sequences mapped on the complex components of the polarization of the optical signal. An example of components $G_{xI}$, $G_{xQ}$, $G_{yI}$, $G_{yQ}$ corresponding to the sending of the pairs of sequences $G_{a1}$, $G_{b1}$ and $G_{a2}$, $G_{b2}$ is provided on figure **FIG. 5a**. The pairs of sequences are transmitted simultaneously on the two polarization axes. The figure **FIG. 5b** illustrates simulated results of correlation of complex components with regards to first polarization X that are achievable by the processing unit 115 from the coherent optical receiver 113. The upper diagram of figure FIG. 5b depicts auto-correlation of $G_{xI}$, $G_{xQ}$ which correspond to a Dirac impulse response. The second diagram "g$_{1x}$(n)", starting from the top of figure FIG. 5b, corresponds to the complex components associated with h$_{xx}$ from equation (45) and with h$_{xy}$ from equation (46). One sample out of 2 is null according to g$_{1x}$(n). The third diagram "g$_{2x}$(n)", starting from the top of figure FIG. 5b, corresponds to null samples as indicated by equation (37). The fourth diagram "g$_{3x}$(n)", starting from the top of figure FIG. 5b, corresponds to the complex components associated with h$_{xy}$ from equation (45) and with h$_{xx}$ from equation (46). One sample out of 4 is null according to g$_{3x}$(n). When considering the samples that are null upon inter-correlation of components $G_{xI}$, $G_{xQ}$, $G_{yI}$, $G_{yQ}$, the auto-correlations of these components achieved by the processing unit 155 allows to determine the impulse response h'$_{xx}$/h$_{xx}$ and h'$_{xy}$/h'$_{xy}$ for the first polarization axis X, as well as h'$_{yy}$/h$_{yy}$ and h'$_{yx}$/h'$_{yx}$ for the second polarization axis Y.

In an embodiment, the symbol rate of the optical signal is determined according to the distance between the optical reflecting means, in order to increase the number of null samples of the inter-correlations of components $G_{xI}$, $G_{xQ}$, $G_{yI}$, $G_{yQ}$. In an example, the symbol rate is determined as follows:

$$f_{symb} = 4p / \left(\frac{2n_g d_s}{c}\right) \qquad (47)$$

where $f_{symb}$ is the symbol rate, $n_g$ is the fiber group index, c is the light velocity, $d_s$ is the inter-distance between optical reflecting means and p is an integer. In an example, with 10m of inter-distance $d_s$ between each of the optical reflecting means, $f_{symb}$ is a multiple of 40MHz.

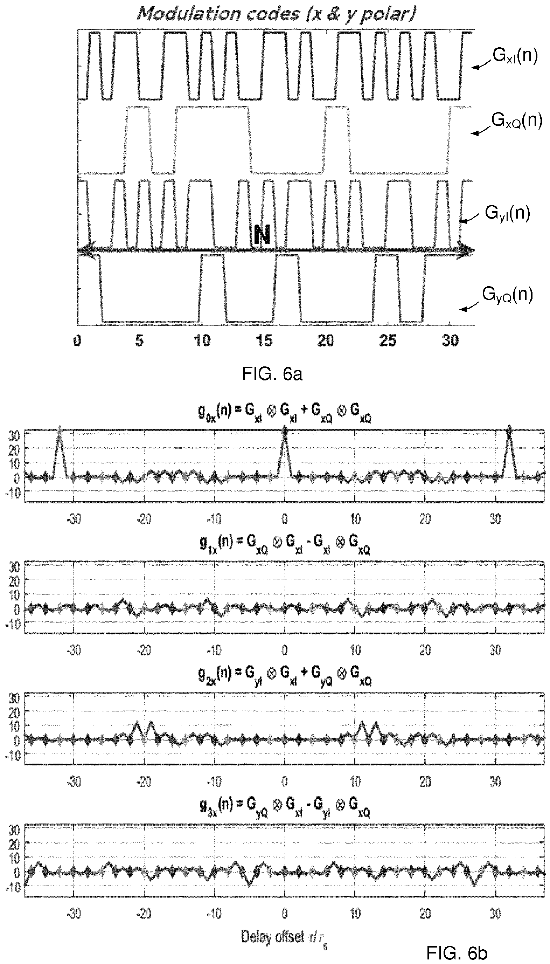

Referring to figures **FIG. 6a** and **FIG. 6b** another pair of sequences and respective correlations results are depicted.

In an embodiment, said other pairs of sequences is determined from the complementary and mutually pair of sequences obtained from Golay sequences and Hadamard matrices. The other pairs for the first polarization axis X and second polarization axis Y are determined as follows:

$$G'_{a1}(2n) = G'_{a1}(2n + 1) = G_{a1}(n) \qquad (48)$$

$$G'_{b1}(2n) = G_{b1}(n) \qquad (49)$$

$$G'_{b1}(2n + 1) = -G_{b1}(n) \qquad (50)$$

$$G'_{a2}(2n) = G'_{a2}(2n + 1) = G_{a2}(n) \qquad (51)$$

$$G'_{b2}(2n) = G_{b2}(n) \qquad (52)$$

$$G'_{b2}(2n+1) = -G_{b2}(n) \qquad (53)$$

The figure FIG. 6a depicts a possible time diagram of the other pairs of sequences.

The other pairs of sequences allow to have more null samples in the inter-correlation corresponding to $g_{3x}(n)$ as depicted in bottom diagram of figure FIG. 6b. In such case one sample out of 2 is null. Therefore the symbol rate is determined as follows:

$$f_{symb} = 2p/(\frac{2n_g d_s}{c}) \qquad (54)$$

In an example, with 10m of inter-distance $d_s$ between each of the optical reflecting means, $f_{symb}$ is a multiple of 20MHz.

Referring to figure **FIG. 3d,** another time diagram of transmission of set of data sequences carried by the optical signal is depicted.

In an embodiment, the transmission of the pairs of sequences $G_{a1}$, $G_{b1}$ and $G_{a2}$, $G_{b2}$ is repeated. Such repetitions are advantageous as the optical waveguide 145 and the optical reflecting means are sounded continuously. It allows to monitor with a fine time granularity, which depends on the symbol frequency, physical modification of the optical waveguide 145. The sounding duration of the optical waveguide 145 is performed then during a duty cycle.

The figure FIG. 3d depicts continuous transmitting of pairs of sequences mapped on QPSK symbols. In another example, the repetitions correspond to transmissions of the pairs of sequences mapped on BPSK symbols alternating with the separation interval.

In an embodiment, the laser source 109 that drives the transmitter 104 and the receiver 113 has a coherence time greater than the propagation time of the optical signal on the optical waveguide between said transmitter 104 and said coherent receiver 113.

In an example, the optical waveguide 145 and the optical channel monitoring system 103 are used to monitor ground comprising oil & gas resources. The symbol frequency is determined as $f_{symb}$=100MHz, with ds=10m (FBG inter-distance), optical waveguide 145 length=1km. The coherence time of the laser source 109 is then in the magnitude of $10^{-5}$s corresponding to a spectral line width of 100 kHz.

In an example, the optical waveguide 145 and the optical channel monitoring system 103 are used in medical application. The optical reflecting means are achieved with Rayleigh effect with a symbol rate is then $f_{symb}$=10GHz offering a resolution of 1 to 10cm, for a length=1m for the optical waveguide 145. The coherence time of the laser source 109 is the magnitude of $10^{-7}$ s corresponding to a spectral line width of 10MHz.

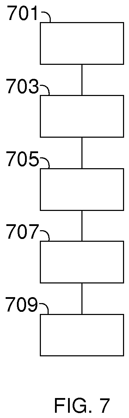

Referring to figure **FIG. 7,** a schematic block diagram of an optical sensing method according to an embodiment of the invention is depicted.

In an embodiment, physical change or mechanical state modification of the optical waveguide 145 is detected by a method of optical sensing. In an example, said method is performed by the optical sensing system 101.

In a step 701, the transmitter 104 transmits coherently on the optical waveguide 145 the optical signal with the set of data sequences, the transmission being driven by the laser source 109.

The optical signal propagates along the optical waveguide 145 and is partially reflected by the optical reflecting means.

In a step 703, the receiver 113, associated to the laser source 109; receives the reflections of the optical signal.

In a step 705, the receiver 113 determines a first channel response of the optical waveguide 145 by performing correlation of the reflections with the transmitted set of data sequences.

In a step 707, the receiver 113 determines a second channel response estimation of the optical waveguide 145 by performing correlations of the newly received reflections of the optical signal with the transmitted set of data sequences.

In a step 709, the first channel response estimation is compared with the second channel response estimation in order to determine if a modification of the optical waveguide 145 occurred in-between the first estimation and the second estimation.

The functions of the various elements shown in the set of figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical channel monitoring system (103) comprising:

   - an optical waveguide (145),
   - the optical waveguide comprising optical reflecting means (135, 137, 139, 141, 143) located over said optical waveguide (145),
   - a sequence generator (111) for generating a set of data sequences,
   - a laser source,
   - a coherent optical transmitter (104) paired to the laser source, connected to the optical waveguide (145), and for transmitting an optical signal comprising the set of data sequences,
   - a coherent optical receiver (113) paired to the laser source and connected to the optical waveguide (145),
   - a processing unit,

   the coherent optical receiver (113) being adapted for receiving reflections of the optical signal reflected by the optical reflecting means (135, 137, 139, 141, 143), the processing unit being adapted for determining a channel response estimation of the optical waveguide (145) by correlating the received reflections of the optical signal with the transmitted set of data sequences,
   **characterized in that** the set of data sequences comprises a first pair of complementary sequences ($G_{a1}$, $G_{b1}$) and a second pair of complementary sequences ($G_{a2}$, $G_{b2}$), the first pair ($G_{a1}$, $G_{b1}$) being carried over a first polarization axis (X) of the optical signal, the second pair ($G_{a2}$, $G_{b2}$) being carried over a second polarization axis (Y) of the optical signal, the second axis (Y) being orthogonal to the first axis (X).

2. An optical channel monitoring system (103) according to claim 1, wherein the laser source has a coherence time greater than the propagation time of the optical signal on the optical waveguide between the coherent optical transmitter and the coherent optical receiver.

3. An optical channel monitoring system (103) according to claim 1 or claim 2, wherein the first pair and the second pair are modulated on the respective first and second polarization axis of the optical signal, a first portion of the optical signal comprising the first pair and a second portion of the optical signal comprising the second pair, the first portion and the second portion being transmitted successively.

4. An optical channel monitoring system (103) according to claim 1, wherein the first pair and the second pair are mutually orthogonal sequences, said first pair and said second pair being modulated on the respective first and second polarization axis of the optical signal with a Binary Phase Shift Keying "BSPK" modulation, the first pair and the second pair being transmitted simultaneously.

5. An optical channel monitoring system (103) according to claim 1, wherein the first pair and the second pair are mutually orthogonal sequences, said first pair and said second pair being modulated on the respective first and second polarization axis of the optical signal with a Quadrature Phase Shift Keying "QSPK" modulation, the first pair ($G_{a1}$, $G_{b1}$) being mapped on a first QPSK symbol, the second pair ($G_{a2}$, $G_{b2}$) being mapped on a second QPSK symbol, the first QPSK symbol and the second QPSK symbol being transmitted simultaneously.

6. An optical channel monitoring system (103) according to any of the claim 1 to 5, wherein the first pair and the second pair are Golay sequences.

7. An optical channel monitoring system (103) according to any of the claims 1 to 6, wherein the coherent optical transmitter (104) is adapted to transmit repeatedly the optical signal according to a duty cycle.

8. An optical channel monitoring system (103) according to any of claims 1 to 7, wherein the optical reflecting means comprise at least two optical reflectors (135, 137, 139, 141, 143).

9. An optical channel monitoring system (103) according to claim 8, wherein the at least two optical reflectors (135, 137, 139, 141, 143) are Fiber Bragg grating "FBG".

10. An optical channel monitoring system (103) according to any of the claims 1 to 9, wherein the symbol rate of the optical signal is determined according to the distance between the locations of the at least two optical reflectors (135, 137, 139, 141, 143).

11. An optical channel monitoring system (103) according to claim 10, wherein the symbol rate of the optical signal is determined according to four times the distance between the locations of the at least two optical reflectors (135, 137, 139, 141, 143).

12. An optical channel monitoring system (103) according to claim 10, wherein the symbol rate of the optical signal is determined according to two times the distance between the locations of the at least two optical reflectors (135, 137, 139, 141, 143).

13. An optical channel monitoring system (103) according to any of the claims 1 to 7, wherein the optical reflecting means comprise particles from the optical waveguide generating Rayleigh scattering.

14. An optical sensing system (101) comprising:

   - an optical channel monitoring system (103) according to any of the claims 1 to 13
   - an other processing unit being adapted for determining a physical change of the optical waveguide (145) inducing a modification of the estimated channel response of said optical waveguide by the optical channel monitoring system (103).

15. An optical sensing method comprising the following steps:

   - coherently transmitting (701) by a coherent optical transmitter (104) paired to a laser source an optical signal comprising a set of data sequences on an optical waveguide (145) comprising optical reflecting means (135, 137, 139, 141, 143),
   - coherently receiving (703) by a coherent optical receiver (113) paired to the laser source reflections of the optical signal,
   - determining (705) a first channel response estimation of the optical waveguide (145) by correlating the received reflections of the optical signal with the transmitted set of data sequences,
   - determining (707) a second channel response estimation of the optical waveguide (145) by correlating other received reflections of the optical signal with the transmitted set of data sequences,
   - determining (709) a physical change of the optical waveguide (145) by comparing the first channel response estimation and the second channel response estimation,
   - **characterized in that** the set of data sequences comprises a first pair of complementary sequences ($G_{a1}$, $G_{b1}$) and a second pair of complementary sequences ($G_{a2}$, $G_{b2}$), the first pair ($G_{a1}$, $G_{b1}$) being carried over a first polarization axis (X) of the optical signal, the second pair ($G_{a2}$, $G_{b2}$) being carried over a second polarization axis (Y) of the optical signal, the second axis (Y) being orthogonal to the first axis (X).

**Patentansprüche**

1. Optisches Kanalüberwachungssystem (103), das Folgendes umfasst:

   - einen optischen Wellenleiter (145),
   - wobei der optische Wellenleiter optische Reflexionsmittel (135, 137, 139, 141, 143) umfasst, die über den optischen Wellenleiter (145) verteilt angeordnet sind,
   - einen Sequenzgenerator (111) zum Erzeugen einer Gruppe von Datensequenzen,
   - eine Laserquelle,
   - einen kohärenten optischen Sender (104), der mit der Laserquelle gekoppelt ist, mit dem optischen Wellenleiter (145) verbunden ist und zum Senden eines optischen Signals dient, das die Gruppe von Datensequenzen umfasst,
- einen kohärenten optischen Empfänger (133), der mit der Laserquelle gekoppelt ist und mit dem optischen Wellenleiter (145) verbunden ist,
- eine Verarbeitungseinheit,

wobei der kohärente optische Empfänger (113) zum Empfangen von Reflexionen des optischen Signals, das durch die optischen Reflexionsmittel (135, 137, 139, 141, 143) reflektiert wird, ausgelegt ist,
wobei die Verarbeitungseinheit zum Bestimmen einer Kanalantwortschätzung des optischen Wellenleiters (145) durch Korrelieren der empfangenen Reflexionen des optischen Signals mit der gesendeten Gruppe von Datensequenzen ausgelegt ist,
**dadurch gekennzeichnet, dass**
die Gruppe von Datensequenzen ein erstes Paar komplementärer Sequenzen ($G_{a1}$, $G_{b1}$) und ein zweites Paar komplementärer Sequenzen ($G_{a2}$, $G_{b2}$) umfasst, wobei das erste Paar ($G_{a1}$, $G_{b1}$) über eine erste Polarisationsachse (X) des optischen Signals geführt wird und das zweite Paar ($G_{a2}$, $G_{b2}$) über eine zweite Polarisationsachse (Y) des optischen Signals geführt wird, wobei die zweite Achse (Y) zur ersten Achse (X) senkrecht ist.

2. Optisches Kanalüberwachungssystem (103) nach Anspruch 1, wobei die Laserquelle eine Kohärenzzeit aufweist, die größer als die Ausbreitungszeit des optischen Signals auf dem optischen Wellenleiter zwischen dem kohärenten optischen Sender und dem kohärenten optischen Empfänger ist.

3. Optisches Kanalüberwachungssystem (103) nach Anspruch 1 oder Anspruch 2, wobei das erste Paar und das zweite Paar auf der ersten bzw. zweiten Polarisationsachse des optischen Signals moduliert sind, wobei ein erster Abschnitt des optischen Signals das erste Paar umfasst und ein zweiter Abschnitt des optischen Signals das zweite Paar umfasst, wobei der erste Abschnitt und der zweite Abschnitt aufeinanderfolgend gesendet werden.

4. Optisches Kanalüberwachungssystem (103) nach Anspruch 1, wobei das erste Paar und das zweite Paar wechselseitig senkrechte Sequenzen sind, wobei das erste Paar und das zweite Paar mit einer Modulation mit binärer Phasenverschiebungsverschlüsselung, "BSPK"-Modulation, auf der ersten bzw. zweiten Polarisationsachse des optischen Signals moduliert sind, wobei das erste Paar und das zweite Paar gleichzeitig gesendet werden.

5. Optisches Kanalüberwachungssystem (103) nach Anspruch 1, wobei das erste Paar und das zweite Paar wechselseitig senkrechte Sequenzen sind, wobei das erste Paar und das zweite Paar mit einer Modulation mit Quadraturphasenverschiebungsverschlüsselung, "QSPK"-Modulation, auf der ersten bzw. zweiten Polarisationsachse des optischen Signals moduliert sind, wobei das erste Paar ($G_{a1}$, $G_{b1}$) auf ein erstes QPSK-Symbol abgebildet ist, das zweite Paar ($G_{a2}$, $G_{b2}$) auf ein zweites QPSK-Symbol abgebildet ist, wobei das erste QPSK-Symbol und das zweite QPSK-Symbol gleichzeitig gesendet werden.

6. Optisches Kanalüberwachungssystem (103) nach einem der Ansprüche 1 bis 5, wobei das erste Paar und das zweite Paar Golay-Sequenzen sind.

7. Optisches Kanalüberwachungssystem (103) nach einem der Ansprüche 1 bis 6, wobei der kohärente optische Sender (104) ausgelegt ist, das optische Signal wiederholt gemäß einer Impulsperiode zu senden.

8. Optisches Kanalüberwachungssystem (103) nach einem der Ansprüche 1 bis 7, wobei die optischen Reflexionsmittel mindestens zwei optische Reflektoren (135, 137, 139, 141, 143) umfassen.

9. Optisches Kanalüberwachungssystem (103) nach Anspruch 8, wobei die mindestens zwei optischen Reflektoren (135, 137, 139, 141, 143) Faser-Bragg-Gitter, "FBG", sind.

10. Optisches Kanalüberwachungssystem (103) nach einem der Ansprüche 1 bis 9, wobei die Symbolrate des optischen Signals gemäß dem Abstand zwischen den Orten der mindestens zwei optischen Reflektoren (135, 137, 139, 141, 143) bestimmt wird.

11. Optisches Kanalüberwachungssystem (103) nach Anspruch 10, wobei die Symbolrate des optischen Signals gemäß dem Vierfachen des Abstands zwischen den Orten der mindestens zwei optischen Reflektoren (135, 137, 139, 141, 143) bestimmt wird.

12. Optisches Kanalüberwachungssystem (103) nach Anspruch 10, wobei die Symbolrate des optischen Signals gemäß dem Zweifachen des Abstands zwischen den Orten der mindestens zwei optischen Reflektoren (135, 137, 139, 141, 143) bestimmt wird.

**13.** Optisches Kanalüberwachungssystem (103) nach einem der Ansprüche 1 bis 7, wobei die optischen Reflexionsmittel Partikel von dem optischen Wellenleiter umfassen, die eine Rayleigh-Streuung erzeugen.

**14.** Optisches Erfassungssystem (101), das Folgendes umfasst:

- ein optisches Kanalüberwachungssystem (103) nach einem der Ansprüche 1 bis 13,
- eine andere Verarbeitungseinheit, die zum Bestimmen einer physikalischen Änderung des optischen Wellenleiters (145), die eine Modifikation der geschätzten Kanalantwort des optischen Wellenleiters durch das optische Kanalüberwachungssystem (103) induziert, ausgelegt ist.

**15.** Optisches Erfassungserfahren, das die folgenden Schritte umfasst:

- kohärentes Senden (701) eines optischen Signals, das eine Gruppe von Datensequenzen umfasst, durch einen kohärenten optischen Sender (104), der mit einer Laserquelle gekoppelt ist, auf einem optischen Wellenleiter (145), der optische Reflexionsmittel (135, 137, 139, 141, 143) umfasst,
- kohärentes Empfangen (703) von Reflexionen des optischen Signals durch einen kohärenten optischen Empfänger (113), der mit der Laserquelle gekoppelt ist,
- Bestimmen (705) einer ersten Kanalantwortschätzung des optischen Wellenleiters (145) durch Korrelieren der empfangenen Reflexionen des optischen Signals mit der gesendeten Gruppe von Datensequenzen,
- Bestimmen (707) einer zweiten Kanalantwortschätzung des optischen Wellenleiters (145) durch Korrelieren anderer empfangener Reflexionen des optischen Signals mit der gesendeten Gruppe von Datensequenzen,
- Bestimmen (709) einer physikalischen Änderung des optischen Wellenleiters (145) durch Vergleichen der ersten Kanalantwortschätzung und der zweiten Kanalantwortschätzung,
- **dadurch gekennzeichnet, dass**

die Gruppe von Datensequenzen ein erstes Paar komplementärer Sequenzen ($G_{a1}$, $G_{b1}$) und ein zweites Paar komplementärer Sequenzen ($G_{a2}$, $G_{b2}$) umfasst, wobei das erste Paar ($G_{a1}$, $G_{b1}$) über eine erste Polarisationsachse (X) des optischen Signals geführt wird, das zweite Paar ($G_{a2}$, $G_{b2}$) über eine zweite Polarisationsachse (Y) des optischen Signals geführt wird, wobei die zweite Achse (Y) zur ersten Achse (X) senkrecht ist.

**Revendications**

**1.** Système de surveillance de canal optique (103) comprenant :

- un guide d'ondes optiques (145),
- le guide d'ondes optiques comprenant des moyens de réflexion optique (135, 137, 139, 141, 143) situés sur ledit guide d'ondes optiques (145),
- un générateur de séquences (111) destiné à générer un ensemble de séquences de données,
- une source laser,
- un émetteur optique cohérent (104) apparié à la source laser, relié au guide d'ondes optiques (145), et destiné à émettre un signal optique comprenant l'ensemble de séquences de données,
- un récepteur optique cohérent (113) apparié à la source laser et relié au guide d'ondes optiques (145),
- une unité de traitement,

le récepteur optique cohérent (113) étant adapté pour recevoir des réflexions du signal optique réfléchi par les moyens de réflexion optique (135, 137, 139, 141, 143),
l'unité de traitement étant adaptée pour déterminer une estimation de réponse de canal du guide d'ondes optiques (145) en corrélant les réflexions reçues du signal optique avec l'ensemble émis de séquences de données,
**caractérisé en ce que**
l'ensemble de séquences de données comprend une première paire de séquences complémentaires ($G_{a1}$, $G_{b1}$) et une deuxième paire de séquences complémentaires ($G_{a2}$, $G_{b2}$), la première paire ($G_{a1}$, $G_{b1}$) étant transportée sur un premier axe de polarisation (X) du signal optique, la deuxième paire ($G_{a2}$, $G_{b2}$) étant transportée sur un deuxième axe de polarisation (Y) du signal optique, le deuxième axe (Y) étant orthogonal au premier axe (X).

2. Système de surveillance de canal optique (103) selon la revendication 1, dans lequel la source laser a un temps de cohérence supérieur au temps de propagation du signal optique sur le guide d'ondes optiques entre l'émetteur optique cohérent et le récepteur optique cohérent.

3. Système de surveillance de canal optique (103) selon la revendication 1 ou la revendication 2, dans lequel la première paire et la deuxième paire sont modulées sur le premier et le deuxième axe de polarisation respectif du signal optique, une première partie du signal optique comprenant la première paire et une deuxième partie du signal optique comprenant la deuxième paire, la première paire et la deuxième paire étant émises successivement.

4. Système de surveillance de canal optique (103) selon la revendication 1, dans lequel la première paire et la deuxième paire sont des séquences mutuellement orthogonales, ladite première paire et ladite deuxième paire étant modulées sur le premier et le deuxième axe de polarisation respectif du signal optique avec une modulation par déplacement de phase bivalente, BSPK, la première paire et la deuxième paire étant émises simultanément.

5. Système de surveillance de canal optique (103) selon la revendication 1, dans lequel la première paire et la deuxième paire sont des séquences mutuellement orthogonales, ladite première paire et ladite deuxième paire étant modulées sur le premier et le deuxième axe de polarisation respectif du signal optique avec une modulation par déplacement de phase en quadrature, QSPK, la première paire ($G_{a1}$, $G_{b1}$) étant mappée sur un premier symbole QPSK, la deuxième paire ($G_{a2}$, $G_{b2}$) étant mappée sur un deuxième symbole QPSK, le premier symbole QPSK et le deuxième symbole QPSK étant émis simultanément.

6. Système de surveillance de canal optique (103) selon l'une quelconque des revendications 1 à 5, dans lequel la première paire et la deuxième paire sont des séquences de Golay.

7. Système de surveillance de canal optique (103) selon l'une quelconque des revendications 1 à 6, dans lequel l'émetteur optique cohérent (104) est adapté pour émettre de façon répétée le signal optique en fonction d'un cycle de service.

8. Système de surveillance de canal optique (103) selon l'une quelconque des revendications 1 à 7, dans lequel les moyens de réflexion optique comprennent au moins deux réflecteurs optiques (135, 137, 139, 141, 143).

9. Système de surveillance de canal optique (103) selon la revendication 8, dans lequel les au moins deux réflecteurs optiques (135, 137, 139, 141, 143) constituent un réseau de Bragg sur fibre, FBG.

10. Système de surveillance de canal optique (103) selon l'une quelconque des revendications 1 à 9, dans lequel le débit de symboles du signal optique est déterminé en fonction de la distance entre les emplacements des au moins deux réflecteurs optiques (135, 137, 139, 141, 143).

11. Système de surveillance de canal optique (103) selon la revendication 10, dans lequel le débit de symboles du signal optique est déterminé en fonction de quatre fois la distance entre les emplacements des au moins deux réflecteurs optiques (135, 137, 139, 141, 143).

12. Système de surveillance de canal optique (103) selon la revendication 10, dans lequel le débit de symboles du signal optique est déterminé en fonction de deux fois la distance entre les emplacements des au moins deux réflecteurs optiques (135, 137, 139, 141, 143).

13. Système de surveillance de canal optique (103) selon l'une quelconque des revendications 1 à 7, dans lequel les moyens de réflexion optique comprennent des particules issues du guide d'ondes optiques générant une diffusion de Rayleigh.

14. Système de détection optique (101) comprenant :

- un système de surveillance de canal optique (103) selon l'une quelconque des revendications 1 à 13
- et une autre unité de traitement adaptée pour déterminer un changement physique du guide d'ondes optiques (145) induisant une modification de la réponse de canal estimée dudit guide d'ondes optiques par le système de surveillance de canal optique (103).

15. Procédé de détection optique comprenant les étapes suivantes :

EP 3 460 441 B1

- émission cohérente (701), par un émetteur optique cohérent (104) apparié à une source laser, d'un signal optique comprenant un ensemble de séquences de données sur un guide d'ondes optiques (145) comprenant des moyens de réflexion optique (135, 137, 139, 141, 143),
- réception cohérente (703), par un récepteur optique cohérent (113) apparié à la source laser, de réflexions du signal optique,
- détermination (705) d'une première estimation de réponse de canal du guide d'ondes optiques (145) par corrélation des réflexions reçues du signal optique avec l'ensemble émis de séquences de données,
- détermination (707) d'une deuxième estimation de réponse de canal du guide d'ondes optiques (145) par corrélation d'autres réflexions reçues du signal optique avec l'ensemble émis de séquences de données,
- détermination (709) d'un changement physique du guide d'ondes optiques (145) par comparaison de la première estimation de réponse de canal et de la deuxième estimation de réponse de canal,
- **caractérisé en ce que**

l'ensemble de séquences de données comprend une première paire de séquences complémentaires ($G_{a1}$, $G_{b1}$) et une deuxième paire de séquences complémentaires ($G_{a2}$, $G_{b2}$), la première paire ($G_{a1}$, $G_{b1}$) étant transportée sur un premier axe de polarisation (X) du signal optique, la deuxième paire ($G_{a2}$, $G_{b2}$) étant transportée sur un deuxième axe de polarisation (Y) du signal optique, le deuxième axe (Y) étant orthogonal au premier axe (X).

FIG. 1

FIG. 2

FIG. 3a

FIG. 3b

FIG. 3c

FIG. 3d

EP 3 460 441 B1

EP 3 460 441 B1

FIG. 4a

$$-(N_G/2+N_{sep})<n<N_G/2+N_{sep}$$

FIG. 4b

21

FIG. 5a

FIG. 5b

Modulation codes (x & y polar)

FIG. 6a

FIG. 6b

701

703

705

707

709

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2765400 A1
- GB 2544125 A
- US 7872737 B2
- US 7271884 B2

**Non-patent literature cited in the description**

- Polarization QAM modulation (POL-QAM) for coherent detection schemes. **BÜLOW ; HENNING.** Optical Fiber Communication Conference. Optical Society of America, 2009